# EUROPEAN PATENT APPLICATION

(11) **EP 2 226 307 A1**
(43) Date of publication of application: **08.09.2010**
(21) Application number: 09380027.4
(22) Date of filing: 20.02.2009
(51) Int. Cl.: C04B 33/04

(54) **Procedure to improve clays so that they can be used to make ceramic products**

(71) Applicant: Arcilla Blanca, S.A., 12110 Alcora-Castellon (ES); Ingenieria de Nanoprocesos, S.L., 12005 Castellon (ES)
(72) Inventor: Menendez Medina, Javier, 12005 Castellon de la Plana (Castellon) (ES); Varella Sanchez, David, 12110 Alcora (Castellon) (ES); Garcia Ten, Francisco Javier, 12006 Castellon de la Plana (Castellon) (ES); Gazulla Barreda, Maria Fernanda, 12006 Castellon de la Plana (Castellon) (ES)

(57) **Abstract**

A procedure for enhancing clays so that they can be used in ceramic products to increase the content of clayey material, to remove the unwanted large particles, to increase the whiteness of the clays after baking and to reduce the percentage of defects after baking comprising the steps of obtaining an aqueous suspension of clay; removing of the fraction greater than 60 µm using physical separation procedures; classifying of the clay in suspension on the basis of the particle size, using mechanical means; treating of the fraction with the smallest particle size; removing the water in the suspension in order to obtain the cake; and washing the cake with water in order to reduce the content of soluble salts, such as sulphates and carbonates, before draining.

## Description

The object of this invention is to improve the different types of clays that can be used in the manufacture of ceramic and porcelain floor tiles, specifically for their use in supports and engobes. The following are also the object of this invention:
- To provide clays with a higher content of clayey minerals, which increases the Al₂O₃ - SiO₂ ratio, thus increasing the plasticity of the clay.
- To reduce the proportion of impurities involving the presence of a high particle level, reducing the number of surface defects affecting the end product.
- To provide a lower proportion of minerals that contain iron, which leads to the product being whiter after it has been baked.
- To reduce the soluble salt content, improving the rheological performance of the suspension, overcoming the problem that causes certain defects in the baked pieces.

This invention applies to the ceramic sector, and to be more specific, is aimed at improving clays and kaolin.

### BACKGROUND OF THE INVENTION

At present, clays, amongst other components, are used in the manufacture of the supports and engobes for ceramic and porcelain pieces, a series of procedures having been developed to improve them, which can be grouped in the following way:
(a) Methods for purifying kaolin by magnetic separation, so that it can be used as a coating or paper filler. Some of the most outstanding ones are described in the following documents:
   - W09958613, where a procedure is described for obtaining a very shiny kaolin pigment. The procedure is based upon selecting kaolin that has a volume of particles less than 2 µm, ranging from 30% to 60% of the total, which is then used to prepare a suspension that is treated magnetically. The kaolin is then subjected to a grinding process and classified with a view to obtaining a certain shape factor for its particles. This procedure is applied to obtaining a coating for paper products.
   - GB1122523, where a process is described for improving the shine on raw kaolin by preparing a suspension that is subjected to a high-intensity magnetic field (between 8,500 and 18,000 Gauss) for a period of time ranging from 30 seconds to 8 minutes. The size of the particles in the kaolin suspension is less than 44 µm, to be specific, 90% of the particles are smaller than 2 µm. Although it is not expressly mentioned, this procedure is applied to the mineral loads in a variety of products (paper, plastic, etc.).
   - US6312511, where a procedure is described for obtaining a high brightness kaolin, which involves applying a magnetic treatment to a kaolin suspension followed by a separation process to ensure that 90% of the particles are less than 2 µm. The product obtained is used as paper filler or as a coating for paper.
(b) Methods for improving raw materials or mixtures of raw ceramic materials by applying magnetic treatment to these materials when they are in suspension. The following are some of the outstanding examples of these methods:
   - GB1469766 where a method is described for the production of white-fired ceramic compositions that consists of preparing a suspension of the entire composition (mixture of raw materials), which is treated magnetically with field strengths that range from 10,000 to 60,000 Gauss.
   - GB1004570 where a method is proposed for manufacturing a white-fired kaolinitic clay whose particle size ranges from 5 to 75 µm, by means of a magnetic separation (magnetic field greater than 10,000 Gauss).
   - DD268235 where a procedure is described for removing magnetic minerals of iron and titanium by means of a high-intensity magnetic separator. The procedure involves preparing suspensions from mixtures of raw materials (mainly kaolin and feldspars), which are screened in a sieve at 90 µm, treated magnetically and then mixed with the rest of the components of the composition. They are finally subjected to a filtering and pressing process.

The inventors, experts on the subject, do not have any knowledge of the existence of a clay enhancing process for use in the manufacture of the supports and engobes that are used in the manufacture of ceramic and porcelain floor tiles such as the one described in this invention patent.

### SUMMARY OF THE INVENTION

This invention is a procedure for enhancing clays so that they can be used in the manufacture of ceramic and porcelain floor tiles. To be more specific, this improves the clays that are used for obtaining the supports and engobes for ceramic and porcelain floor tiles, as well as the use of this procedure.

The aims of the procedure are to increase the content of clayey minerals, to remove the impurities with respect to the size of the particle, to improve the degree of whiteness after baking and to reduce the soluble salt content. This procedure includes at least, the following steps:
(a) a first step, which involves preparing an aqueous suspension with the clay or clays either by grinding or by dispersion; and where the content of solids in suspension ranges from 10% to 70% in weight and, occasionally, flocculants of an organic and/or inorganic nature can be used, treated to reduce viscosity;
(b) a second step, where the fraction greater than 60 µm is separated, through carrying out a physical separation process, by screening or sifting the suspension and/or similar;
(c) a third step involving classification on the basis of the size of the clay suspension, with a view to enriching the suspension containing the fraction with the smallest particle size;
(d) a fourth step, which involves the magnetic separation of the fine fraction that is obtained at the third step, through the use of magnetic fields whose intensity is greater than 8,000 Gauss.
(e) a fifth step, which involves the separation of soluble salts, basically sulphates and carbonates, by washing the clay, at least once, using ongoing washing and draining procedures;

It must be pointed out here that this procedure can obviate some of the steps (b)-(e) described above, depending on the type of clay that is to be enhanced.

Clays with a higher content of clayey minerals can be obtained thanks to the invention thus described, which increases the Al₂O₃ - SiO₂ ratio, giving them a higher degree of plasticity. Along the same lines, this clay yields a lower percentage of impurities involving high particle sizes, which reduces the amount of surface defects in the end product. Finally, the invention also yields a lower proportion of minerals that contain iron, which leads to an improvement in the degree of whiteness after baking, and reduces the content of soluble salts, improving the rheological performance of the suspension, preventing certain defects from affecting the baked pieces.

Throughout the description and the claims, the use of the word "includes" and other synonyms in this context, is not to be interpreted as excluding other technical characteristics, additives, components or steps to be taken. For experts on the subject, other objects, advantages and characteristics of the invention will be apparent, partly from the description and partly from practical aspects of the invention. The following example is provided by way of illustration, but in no way is it to be interpreted as being in any way restrictive where this invention is concerned. Furthermore, this invention covers all the potential combinations of specific and preferred realisations that are indicated here.

### PREFERRED EMBODIMENT OF THE INVENTION AND EXAMPLE

This invention is also illustrated by means of the following example, whose application is likewise non-restrictive:

### Example 1:

Clay used in the manufacture of white-fired ceramic supports is used, with a content of 3.80% in weight of Fe₂O₃, 0.87% in weight of TiO₂, 22% Al₂O₃ and 3,478 ppm of sulphur. The clay is dispersed with water and deflocculant (1% in weight of sodium silicate) in a turbo dilution device until a solid content of 41% in weight is achieved. The average size of the particles of clay in suspension (d₅₀) is 9.2 µm.

After that, and first of all, a first grain-size cut of the clay suspension is made at 100 µm, with a view to obtaining a sieving with 2.68% in weight of Fe₂O₃, 0.93% in weight of TiO₂ and 23% in weight of Al₂O₃. The d₅₀ of the clay suspension is 9.1 µm.

A second grain-size cut is then made, thus obtaining a fine fraction d₅₀ = 7.9 µm. The content of this fraction is 2.85% in weight of Fe₂O₃, 0.93% in weight of TiO₂ and 26.4% in weight of Al₂O₃.

After that, the one single step of magnetic separation is carried out using a magnetic field of 8,000 Gauss. After this treatment, the clay in suspension has a Fe₂O₃ content of 2.60% in weight.

The magnetically treated suspension is then washed several times with water to entrain the soluble salts, after which it is dried to obtain cakes whose moisture content is 20% in weight. At the end of this process, the total sulphur content in the clay is 640 ppm.

Clay with a greater plasticity is obtained after this enhancing procedure has been completed, this being due to the increase in the content of clayey minerals while at the same time there is a lower proportion of impurities (Fe₂O₃ and sulphur). The table below shows the chemical composition of the original clay and the treated clay, as well as the plasticity ("*Perfrekorn"* Method) and the *Hunter Lab* chromaticity coordinates after the clay has been baked at 1,190 °C:

| | Untreated | Treated |
|---|---|---|
| SiO₂ (%) | 58,47 | 56,1 |
| Al₂O₃ (%) | 22.0 | 26.4 |
| Fe₂O₃ (%) | 3.80 | 2.60 |
| TiO₂ (%) | 0.87 | 0.93 |
| S (ppm) | 3480 | 640 |
| Plasticity (IP) | 12 | 25 |
| L* | 45.5 | 49.8 |
| a* | 6.1 | 5.0 |
| b* | 8.5 | 11.0 |

## Claims

1. A procedure for enhancing clays so that they can be used in ceramic products to increase the content of clayey material, to remove the unwanted large particles, to increase the whiteness of the clays after baking and to reduce the percentage of defects after baking **characterised in that** it comprises the following steps:
(i) a first step at which an aqueous suspension of clay is obtained;
(ii) a second step consisting of the removal of the fraction greater than 60 µm using physical separation procedures;
(iii) a third step involving the classification of the clay in suspension on the basis of the particle size, using mechanical means;
(iv) a fourth step that involves the magnetic treatment of the fraction with the smallest particle size;
(v) a fifth step that consists of removing the water in the suspension in order to obtain the cake; and
(vi) a sixth step that involves washing the cake with water in order to reduce the content of soluble salts, such as sulphates and carbonates, before draining.

2. A procedure like the one described in Claim 1 where the composition of the clay includes a minimum of the following minerals: illite, mica, kaolinite and quartz.

3. A procedure like the one described in Claims 1 and 2 where the solid content in the aqueous suspension of clay ranges from 10% to 70% in weight.

4. A procedure like the one described in the previous claims, where deflocculants of an organic and/or inorganic nature are used at the step where the aqueous suspension of clay is prepared.

5. A procedure like the one described in the previous claims, where the clay subjected to the size classification step is enriched with the fractions with a smaller particle size, obtaining an average particle diameter that ranges from 2 µm to 20 µm.

6. A procedure like the one described in the previous claims, where the fourth step of magnetic treatment of the fraction with the smallest particle size is carried out in one or more ongoing steps, through the use of a high-density magnetic separator, with field strengths that are equivalent to or greater than 8,000 Gauss.

7. A procedure like the one described in the previous claims, where the clayey suspension is subjected to one or more washes to remove the soluble salts.

8. A procedure like the one described in the previous claims, where the clayey suspension is dried to obtain a cake whose moisture content ranges from 10% to 40%.

9. Use of the procedure followed in Claims 1 to 8 **characterised in that** the enhanced clay is suitable for use as the support with which ceramic and porcelain floor tiles are manufactured.

10. Use of the procedure followed in Claims 1 to 8 **characterised in that** the enhanced clay is suitable for use as the engobe with which ceramic and porcelain floor tiles are manufactured.
